# EUROPÄISCHE PATENTSCHRIFT

(11) **EP 1 954 442 B1**
(45) Veröffentlichungstag und Bekanntmachung des Hinweises auf die Patenterteilung: **01.07.2009**
(21) Anmeldenummer: 06819526.2
(22) Anmeldetag: 16.11.2006
(51) Int. Cl.: B23Q 11/00

(54) **VERFAHREN ZUR REDUKTION VON SCHWINGUNGEN EINES MASCHINENELEMENTS UND/ODER EINES WERKSTÜCKS**
METHOD FOR REDUCING VIBRATIONS OF A MACHINE ELEMENT AND/OR A WORKPIECE
PROCEDE DE REDUCTION DES VIBRATIONS D'UN ELEMENT DE MACHINE ET / OU D'UNE PIECE

(30) Priorität: 30.11.2005 DE 102005057175
(43) Veröffentlichungstag der Anmeldung: 13.08.2008
(73) Patentinhaber: SIEMENS AKTIENGESELLSCHAFT, 80333 München (DE)
(72) Erfinder: BRETSCHNEIDER, Jochen, 73732 Esslingen (DE); KLAUS, Maximilian, 70469 Stuttgart (DE)
(86) Internationale Anmeldenummer: PCT/EP2006/068538
(87) Internationale Veröffentlichungsnummer: WO 2007/062985

(56) Entgegenhaltungen:
- US-A- 4 438 599
- US-A- 4 530 507

## Beschreibung

Die Erfindung betrifft ein Verfahren zur Reduktion von Schwingungen eines.Maschinenelements und/oder eines Werkstücks bei einer Werkzeugmaschine, Produktionsmaschine und/oder bei einer als Roboter ausgebildeten Maschine entsprechend dem Oberbegriff des Anspruchs 1 (WO-A-2005/042195). Weiterhin betrifft die Erfindung eine diesbezügliche Maschine entsprechend dem Oberbegriff des Anspruchs 4 (WO-A-2005/042195).

Bei Maschinen wie z.B. Werkzeugmaschinen, Produktionsmaschinen und/oder bei Robotern treten während eines Bearbeitungsvorgangs durch den Bearbeitungsvorgang oder durch eine Störung erzeugte Schwingungen an Maschinenelementen und/oder an einem zu bearbeitenden Werkstück der Maschine auf. Insbesondere bei Werkzeugmaschinen treten z.B. bei spanabhebenden Bearbeitungsvorgängen wie z.B. Drehen oder Fräsen so genannte Ratterschwingungen auf die die Güte des Bearbeitungsvorgangs und die erzielbare Bearbeitungsgeschwindigkeit herabsetzen. Ratterschwingungen entstehen z.B. wenn dass verwendete Werkzeug und/oder das Werkstück durch die beim Bearbeitungsvorgang auftretenden Kräfte zu Schwingungen in seiner Eigenfrequenz angeregt wird. Auftretende Schwingungen des Werkzeugs und/oder des Werkstücks hinterlassen eine wellige Oberfläche auf dem Werkstück, wobei die wellige Oberfläche bei einem erneuten Kontakt mit dem Werkzeug die Schwingungen noch verstärken kann.

Eine bekannte Maßnahme Schwingungen und insbesondere Ratterschwingungen zu reduzieren, besteht in der Möglichkeit beim Auftreten von Schwingungen die Drehzahl mit der sich das Werkzeug oder das Werkstück dreht beim Auftreten der Ratterschwingungen zu reduzieren.

Aus der deutschen Offenlegungsschrift DT 25 20 946 A1 ist ein Verfahren zur Verhinderung oder Beseitigung von Ratterschwingungen einer Arbeitsspindel von Werkzeugmaschinen und eine Einrichtung zur Durchführung dieses Verfahrens bekannt.

Aus der DE 698 04 982 T2 ist eine Vorrichtung und ein Verfahren zum Empfehlen von dynamischen bevorzugten Bearbeitungsgeschwindigkeiten bekannt.

Aus der Offenlegungsschrift DE 44 05 660 A1 ist ein Verfahren und eine Anordnung zum Betreiben einer spanabhebenden Werkzeugmaschine, insbesondere einer Kreissäge-, Fräs-, Schleifmaschine oder dergleichen bekannt.

Aus der Offenlegungsschrift DE 102 29 134 A1 ist eine Vorrichtung und ein Verfahren zur Werkstückbearbeitung mit rotierenden Werkzeugen bekannt, bei der zur Reduzierung von Schwingungen ein rotierendes Werkzeug durch eine in einem drehendem System zwischen Antriebswelle und Werkzeug angebrachte Verstelleinheit bezüglich der Antriebswelle dynamisch bewegt wird.

Aus der Offenlegungsschrift DE 198 25 373 A1 ist eine Einspannung eines Werkzeugs in einer Werkzeugaufnahme bekannt, wobei auftretende Schwingungen mit Hilfe eines nachgiebigen eine hohe Dämpfung aufweisenden Elements, das in den Kraftfluss zwischen dem Werkzeug und der Werkzeugaufnahme eingefügt ist, reduziert werden.

Aus der Offenlegungsschrift DE 102 20 937 A1 ist ein Verfahren und eine Vorrichtung zur Dämpfung einer auftretenden Ratterschwingung bei einer Bearbeitungsmaschine bekannt.

Der Erfindung liegt die Aufgabe zugrunde, während eines Bearbeitungsvorgangs auftretende Schwingungen eines Maschinenelements und/oder eines Werkstücks zu reduzieren.

Diese Aufgabe wird gelöst durch ein Verfahren gemäß Anspruch 1.

Weiterhin wird diese Aufgabe gelöst durch eine Maschine gemäß Anspruch 4.

Vorteilhafte Ausbildungen der Erfindung ergeben sich aus den abhängigen Ansprüchen.

Vorteilhafte Ausbildungen des Verfahrens ergeben sich analog zur vorteilhaften Ausbildungen der Maschine und umgekehrt.

Es erweist sich als vorteilhaft, wenn die Spannkraft mittels eines Piezoelements verändert wird. Mittels eines Piezoelements kann die Spannkraft besonders einfach verändert werden.

Ferner erweist es sich als vorteilhaft, wenn die Spannkraft mittels eines Hydraulikelements verändert wird. Mit Hilfe eines Hydraulikelements lässt sich die Spannkraft auf einfache Art und Weise verändern.

Ferner erweist es sich als vorteilhaft, wenn die Spannkraft mittels eines Linearmotors verändert wird. Mit Hilfe eines Linearmotors kann ebenfalls auf einfache Art und Weise die Spannkraft verändert werden.

Weiterhin erweist es sich als vorteilhaft, wenn die Spannkraft in Form einer Torsionsspannkraft, welche eine Torsionsspannung im Werkstück bewirkt, vorliegt. Insbesondere bei länglichen Werkstücken kann durch Einbringen einer Torsionsspannkraft in das Werkstück eine besonders gute Arretierung des Werkstücks erzielt werden.

In diesem Zusammenhang erweist es sich als vorteilhaft, wenn die Torsionsspannkraft mittels eines rotatorischen Antriebs erzeugt und verändert wird, da die Torsionsspannung dann leicht veränderbar ist.

Ferner erweist es sich als vorteilhaft, wenn die Torsionsspannkraft verändert wird, wobei das Werkstück an zwei Stellen des Werkstücks in die Werkstückhaltevorrichtung eingespannt wird und mittels eines einer jeden Stelle zugeordneten rotatorischen Antriebs verdreht wird. Durch diese Maßnahme lässt sich eine besonders gute Arretierung des Werkstücks, insbesondere bei länglichen Werkstücken erzielen, wobei wenn das Werkstück an zwei Stellen rotierbar in die Werkstückhaltevorrichtung eingespannt wird, das Werkstück während des Bearbeitungsvorgangs gedreht werden kann aber durch entsprechende Ansteuerung der beiden Antriebe die Torsionsspannkraft erhalten bleibt und verändert werden kann.

In diesem Zusammenhang erweist es sich als vorteilhaft, dass der rotatorische Antrieb als Direktantrieb ausgebildet ist. Diese Maßnahme erlaubt eine einfache Konstruktion der Werkstückhaltevorrichtung.

Weiterhin erweist es sich als vorteilhaft, wenn die Spannkraft sich aus einer Linearspannkraft und einer Torsionsspannkraft zusammensetzt, wobei die Linearspannkraft mittels eines Piezoelements, eines Hydraulikelements und/oder eines Linearmotors verändert wird und die Torsionsspannkraft mit Hilfe eines rotatorischen Antriebs verändert wird, wobei der rotatorische Antrieb als Direktantrieb ausgebildet sein kann.

Weiterhin erweist es sich als vorteilhaft, wenn das Auftreten von Schwingungen ermittelt wird indem das Signal eines Schwingungssensors überwacht wird und/oder indem eine Antriebsgröße überwacht wird. Der Einsatz von Schwingungssensoren und/oder einer Überwachung einer Antriebsgröße wie z.B. ein Antriebsstrom stellen eine einfache Möglichkeiten dar auftretende Schwingungen zu ermitteln.

Weiterhin erweist es sich als vorteilhaft, wenn die Spannkraft solange verändert wird, bis die Amplituden der Schwingungen minimal sind. Durch diese Maßnahme lassen sich die auftretenden Schwingungen minimieren.

Zwei Ausbildungsbeispiele der Erfindung sind in der Zeichnung dargestellt und werden im Folgenden näher erläutert. Dabei zeigen:
FIG 1 eine erfindungsgemäße Maschine und
FIG 2 eine weitere erfindungsgemäße Maschine.

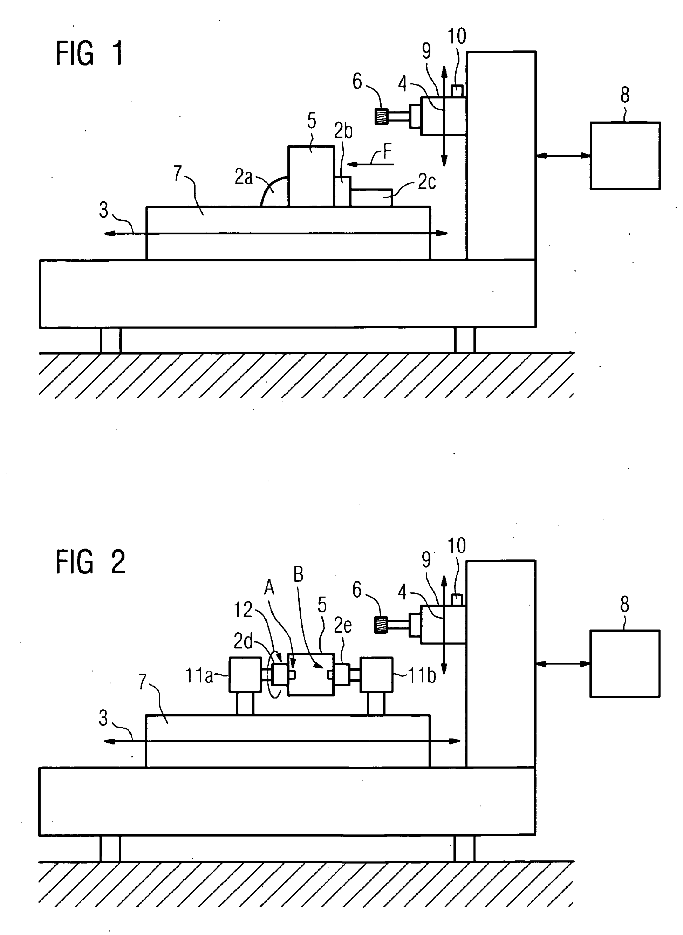

In FIG 1 ist in Form einer schematisierten Darstellung eine Maschine 1, die im Rahmen des Ausführungsbeispiels als Werkzeugmaschine ausgebildet ist, dargestellt. Die Maschine 1 weist einen verfahrbaren Antrieb 9 zum rotierenden antreiben eines Werkzeugs 6 auf, wobei der Antrieb 9 in senkrechter Richtung verfahrbar ist, was durch einen Pfeil 4 angedeutet ist.

Weiterhin weist die Maschine 1 einen in Richtung des Pfeils 3 verfahrbaren Werkstückschlitten 7 auf, auf dem mittels einer Werkstückhaltevorrichtung ein zu bearbeitendes Werkstück 5 arretiert ist. Im Rahmen des Ausführungsbeispiels umfasst die Werkstückhaltevorrichtung eine erste Spannbacke 2a die mit dem Werkstückschlitten 7 fest verbunden ist, eine zweite Spannbacke 2b, die auf dem Werkstückschlitten 7 in waagrechter Richtung beweglich angeordnet ist und ein eine Spannkraft F erzeugendes Kraftelement 2c auf. Das Kraftelement 2c übt eine Spannkraft F auf die zweite Spannbacke 2b aus und drückt diese an das Werkstück, so dass das Werkstück 5 solchermaßen arretiert wird. Weiterhin weist die Maschine zur Ermittelung auftretender Schwingungen, insbesondere von Ratterschwingungen an einem Maschinenelement, dass im Rahmen des Ausführungsbeispiels als Antrieb 9 ausgebildet ist einen Schwingungssensor 10 auf. Weiterhin weist die Maschine 1 eine Steuerungs- und/oder Regelungseinrichtung 8 zur Steuerung und/oder Regelung der Maschine 1 auf. Im Rahmen des Ausführungsbeispiels ist das Werkzeug 6 als Fräser ausgebildet.

Treten nun während des Bearbeitungsvorgangs, d.h. in diesem Fall während des Fräsvorgangs Schwingungen, insbesondere Ratterschwingungen auf, dann werden diese Schwingungen von dem Schwingungssensor 10 erfasst und ein entsprechendes Schwingungssignal der Steuerungs- und/oder Regelungseinrichtung 8 zugeführt Erfindungsgemäß werden zur Reduktion von während des Bearbeitungsvorgangs auftretenden Schwingungen die zur Arretierung des Werkstücks 5 verwendete Spannkraft F mit der die Werkstückhaltevorrichtung auf das Werkstück einwirkt verändert in dem die Spannkraft F vergrößert oder verkleinert wird. Dies geschieht mit Hilfe des Kraftelements 2c, das z.B. als Hydraulikelement oder als Linearmotor ausgebildet sein kann. Das Kraftelement 2c kann aber auch zu Veränderungen der Spannkraft ein Piezoelement aufweisen oder als Piezoelement ausgebildet sein mit Hilfe dessen die Spannkraft F verändert werden kann. Mit Hilfe der Steuerungs- und/oder der Regelungseinrichtung 8 wird die Veränderung der Spannkraft F gesteuert in dem dass Kraftelement 2c entsprechend angesteuert wird. Es ist dabei vorteilhaft, die Spannkraft F solange im zulässigen und möglichen Rahmen zu verändern bis die Amplituden der Schwingungen minimal sind.

Selbstverständlich ist es auch denkbar, dass das Kraftelement aus einer Kombination von Linearmotor und/oder Hydraulikelement und/oder Piezoelement ausgebildet ist.

Der Schwingungssensor 10 kann selbstverständlich auch in der Nähe des Werkstücks angebracht werden und solchermaßen am Werkstück auftretende Schwingungen erfassen. Alternativ oder zusätzlich können auftretende Schwingungen aber auch durch Überwachung der Antriebsströme des Antriebs 9 oder des der Übersichtlichkeit halber in FIG 1 nicht dargestellten Antriebs des Werkszeugschlitten 3 ermittelt werden.

Die in FIG 2 dargestellte Ausführungsform entspricht im Grundaufbau im Wesentlichen der vorstehenden in FIG 1 beschriebenen Ausführungsform. Gleiche Elemente sind daher in FIG 2 mit den gleichen Bezugszeichen versehen wie in FIG 1. Der wesentliche Unterschied der Ausführungsform gemäß FIG 2 gegenüber der Ausführungsform gemäß FIG 1 besteht darin, dass die Werkstückhaltevorrichtung derart ausgebildet ist, dass die Spannkraft, die auf das Werkstück einwirkt und verändert wird in Form einer Torsionsspannkraft, welche eine Torsionsspannung im Werkstück bewirkt, vorliegt. Die Werkstückhaltevorrichtung gemäß FIG 2 weist hierzu zwei rotatorische Antriebe 11a und 11b auf, wobei der rotatorische Antrieb 11a eine Spannbacke 2d drehbar antreibt und der rotatorische Antrieb 11b eine weitere Spannbacke 2e drehbar antreibt. Das Werkstück ist an den Stellen A und B in die Werkstückhaltevorrichtung eingespannt, wobei zur Arretierung des Werkstücks eine Torsionsspannkraft erzeugt wird in dem dass Werkstück 5 mittels der rotatorischen Antriebe 11a und 11b verdreht wird.

In dem Ausführungsbeispiel wird der Antrieb 11b so angesteuert, dass dieser seine Position hält, während der Antrieb 11a um einen kleinen Winkel gedreht wird, was durch einen Pfeil 12 angedeutet ist, um im Werkstück eine Torsionsspannung zu erzeugen. Im Gegensatz zu der Ausführungsform gemäß FIG 1 wird bei der Ausführungsform gemäß FIG 2 somit unter anderem eine Torsionsspannkraft zur Arretierung des Werkstücks verwendet. Treten bei der Fräsbearbeitung des Werkstücks Schwingungen an einem Maschinenelement und/oder am Werkstück auf, so wird die vom Antrieb 11a erzeugte Torsionsspannkraft verändert und solchermaßen die Schwingungen reduziert. Die Ausführungsform gemäß FIG 2 ist insbesondere bei einem länglich geformten Werkstück, das wenn keine Arretierung des Werkstücks mittels einer Torsionsspannkraft durchgeführt wird, nicht ordnungsgemäß arretiert werden kann, da es sich sonst unter den bei dem Bearbeitungsvorgang einwirkenden Kräfte zu verbiegen beginnt.

Die in FIG 2 dargestellte Ausbildung der Werkstückhaltevorrichtung bietet zu dem den Vorteil, dass während des Bearbeitungsvorgangs das Werkstück mittels der beiden Antriebe 11a und 11b in die gleiche Richtung gedreht werden kann, wobei jedoch die Antriebe 11a und 11b so angesteuert werden, dass die Torsionsspannkraft während der Drehbewegung erhalten bleibt und sich bei Auftreten von Schwingungen verändern lässt.

Die Antriebe 11a und 11b sind in dem Ausführungsbeispiel als Direktantriebe, insbesondere als Torquemotoren ausgebildet, was einen einfachen konstruktiven mechanischen Aufbau der Werkstückhaltevorrichtung ermöglicht.

Es ist natürlich auch möglich, dass die Torsionsspannkraft mittels nur eines einzelnen rotatorischen Antriebs verändert wird, in dem z.B. der Antrieb 11b entfällt und die Spannbacke 2e ortsfest mit den Werkstückschlitten 7 verbunden wird.

Bei der Ausführungsform gemäß FIG 1 liegt die Spannkraft F in Form einer Linearspannkraft, die in einer linearen Richtung auf das Werkstück einwirkt vor, während bei der Ausführungsform gemäß FIG 2, die Spannkraft als Torsionsspannkraft die eine Torsionsspannung im Werkstück bewirkt, vorliegt. Es ist natürlich auch möglich beide Ausführungsformen zu kombinieren, wobei sich in diesem Fall die Spannkraft aus einer Linearspannkraft und einer Torsionsspannkraft zusammensetzt, wobei der Antrieb 11a gemäß FIG 2 auch in linearer Richtung, z.B. mittels eines geeigneten Hydraulikelementes, wie es in FIG 1 verwendet wird, eine Linearspannkraft auf das Werkstück 5 ausüben kann.

Durch die Reduktion der Schwingungen kann die Bearbeitungsgeschwindigkeit und die Zustelltiefe ins Material erhöht werden, wodurch sich eine Erhöhung der Produktivität erzielen lässt und/oder die Bearbeitungsgüte verbessert werden kann.

Es sein an dieser Stelle angemerkt, dass im Rahmen der Erfindung z.B. auch ein in die Maschine eingespanntes Werkzeug als Maschinenelement angesehen wird.

## Patentansprüche

1. Verfahren zur Reduktion von Schwingungen eines Maschinenelements (9) und/oder eines **zu bearbeitenden** Werkstücks (5) bei einer Werkzeugmaschine, Produktionsmaschine und/oder bei einer als Roboter ausgebildeten Maschine,
**dadurch gekennzeichnet, dass** bei Auftreten der Schwingungen eine zur Arretierung des Werkstücks (5) verwendete Spannkraft (F) mit der eine Werkstückhaltevorrichtung (2a, 2b,2c,2d,2e,11a,11b) auf das Werkstück (5) einwirkt, verändert wird, wobei die Spannkraft (F) mittels eines-Piezoelements verändert wird, **wobei mittels der Werkstückhaltevorrichtung das Werkstück arretiert wird.**

2. Verfahren nach Anspruch 1, **dadurch gekennzeichnet, dass** das Auftreten von Schwingungen ermittelt wird indem das Signal eines Schwingungssensors (10) überwacht wird und/oder indem eine Antriebsgröße überwacht wird.

3. Verfahren nach einem der vorhergehenden Ansprüche, **dadurch gekennzeichnet, dass** die Spannkraft solange verändert wird, bis die Amplituden der Schwingungen minimal sind.

4. Maschine, wobei die Maschine als Werkzeugmaschine, Produktionsmaschine und/oder als Roboter ausgebildet ist, wobei die Maschine eine Werkstückhaltevorrichtung (2a,2b,2c,2d,2e, 11a,11b) aufweist,
**dadurch gekennzeichnet, dass** die Maschine derart ausgebildet ist, dass bei Auftreten von Schwingungen eines Maschinenelements (9) und/oder eines **zu bearbeitenden** Werkstücks (5) eine zur Arretierung des Werkstücks (5) verwendete Spannkraft (F) mit der die Werkstückhaltevorrichtung (2a,2b,2c,2d,2e,11a,11b) auf das Werkstück (5) einwirkt, verändert wird, wobei die Spannkraft (F) mittels eines Piezoelements verändert wird, **wobei mittels der Werkstückhaltevorrichtung das Werkstück arretierbar ist.**

## Claims

1. Method for reducing vibrations of a machine element (9) and/or of a workpiece (5) to be processed in a machine tool, production machine and/or in a machine which is embodied as a robot, **characterized in that** in the event of the vibrations occurring, a clamping force (F) which is used to lock the workpiece (5) and with which a workpiece holding device (2a,2b,2c,2d,2e,11a,11b) acts on the workpiece (5) is varied, the clamping force (F) being varied by means of a piezo element, and the workpiece being locked by means of the workpiece holding device.

2. Method according to Claim 1, **characterized in that** the occurrence of vibrations is determined by virtue of the signal of a vibration sensor (10) being monitored and/or by virtue of a drive variable being monitored.

3. Method according to one of the preceding claims, **characterized in that** the clamping force is varied until the amplitudes of the vibrations are at a minimum.

4. Machine, with the machine being embodied as a machine tool, production machine and/or as a robot, with the machine having a workpiece holding device (2a,2b,2c,2d,2e,11a,11b), **characterized in that** the machine is designed such that, in the event of vibrations of a machine element (9) and/or of a workpiece (5) to be processed occurring, a clamping force (F) which is used to lock the workpiece (5) and with which the workpiece holding device (2a,2b,2c,2d,2e,11a,11b) acts on the workpiece (5) is varied, the clamping force (F) being varied by means of a piezo element, and the workpiece being locked by means of the workpiece holding device.

## Revendications

1. Procédé de réduction des vibrations d'un élément ( 9 ) de machine et/ou d'une pièce ( 5 ) à usiner dans une machine-outil, dans une machine de production et/ou dans une machine constituée en robot,
**caractérisé en ce que**, lorsque des vibrations se produisent, une force ( F ) de serrage, qui est utilisée pour arrêter la pièce ( 5 ) et par laquelle un dispositif ( 2a, 2b, 2c, 2d, 2e, 11a, 11b ) de maintien de la pièce agit sur la pièce, est modifiée, la force ( F ) de serrage étant modifiée au moyen d'un élément piézoélectrique, la pièce étant arrêtée au moyen du dispositif de maintien de la pièce.

2. Procédé suivant la revendication 1, **caractérisé en ce que** l'on détermine l'apparition de vibrations en contrôlant le signal d'un capteur ( 10 ) de vibrations et/ou en contrôlant une grandeur d'entraînement.

3. Procédé suivant l'une des revendications précédentes, **caractérisé en ce que** l'on modifie la force de serrage jusqu'à ce que les amplitudes des oscillations soient minimum.

4. Machine, la machine étant constituée en machine-outil, en machine de production ou en robot, dans laquelle la machine ( 1 ) a le dispositif ( 2a, 2b, 2c, 2d, 2e, 11a, 11b de maintien d'une pièce,
**caractérisée en ce que** la machine est constituée de façon à ce que, lorsqu'il se produit des vibrations d'un élément ( 9 ) de la machine et/ou d'une pièce ( 5 ) à usiner, une force ( F ) de serrage, qui est utilisée pour arrêter la pièce ( 5 ) et par laquelle un dispositif ( 2a, 2b, 2c, 2d, 2e, 11a, 11b ) de maintien de la pièce agit sur la pièce, est modifiée, la force ( F ) de serrage étant modifiée au moyen d'un élément piézoélectrique, la pièce étant arrêtée au moyen du dispositif de maintien de la pièce.
